Europäisches Patentamt

European Patent Office

Office européen des brevets

(11) Publication number : 0 564 175 A1

## (12) EUROPEAN PATENT APPLICATION

(21) Application number : 93302331.9

(22) Date of filing : 25.03.93

(51) Int. Cl.⁵ : G01C 19/56

(30) Priority : 01.04.92 GB 9207148

(43) Date of publication of application :
06.10.93 Bulletin 93/40

(84) Designated Contracting States :
DE FR GB IT NL SE

(71) Applicant : BRITISH AEROSPACE PUBLIC
LIMITED COMPANY
Warwick House, P.O. Box 87, Farnborough
Aerospace Centre
Farnborough, Hants. GU14 6YU (GB)

(72) Inventor : Norris, Timothy Sweyn, British
Aerospace Syst.
& Equipment Ltd., Gunnelswood Road,
Stevenage
Hertfordshire SG1 2DB (GB)

(74) Representative : Rooney, Paul Blaise et al
British Aerospace plc, Company
Headquarters, Corporate IPR Department,
Lancaster House, P.O. Box 87, Farnborough
Aerospace Centre
Farnborough, Hants. GU14 6YU (GB)

(54) A rate sensor having an electromagnetic drive and ring resonator.

(57) A rate sensor (18) of, for example, the planar type is provided with an electro magnetic drive (10) rather than an electrostatic drive. The electro-magnetic drive comprises a magnetic excitation device (10) for generating a magnetic force (Fm) and a paramagnetic region (14) on the vibrating portion (16) of sensor (18) for interacting with said magnetic excitation device so as to excite said vibration. This arrangement has the advantage of permitting appreciable force force to be achieved for gap separations of typically 0.5 mm and awards the need to generate high voltages. Moreover, the problem of dust contamination in narrow gaps is avoided and the effects of air damping can be reduced so that adequate sensitivity can be achieved without the need to operative resonators within a vacuum enclosure.

Fig.3.

EP 0 564 175 A1

This invention relates to a rate sensor drive and relates particularly, but not exclusively, to a rate sensor having an electro-magnetic drive for exciting vibration thereof.

In order to accelerate vibration in shell or planar rate sensors, electrostatic excitation is often employed. Typical examples of such arrangements are shown in GB 2021266 and GB 2156523. In both these arrangements the drive technique has the disadvantage of requiring a small gap separation to achieve any appreciable excitation force between electrodes since the force $F_e$ generally developed between two parallel plates of a capacitor is given by

$$F_e = ( - A \varepsilon v^2 ) / (2 x^2) \quad Eq.1$$

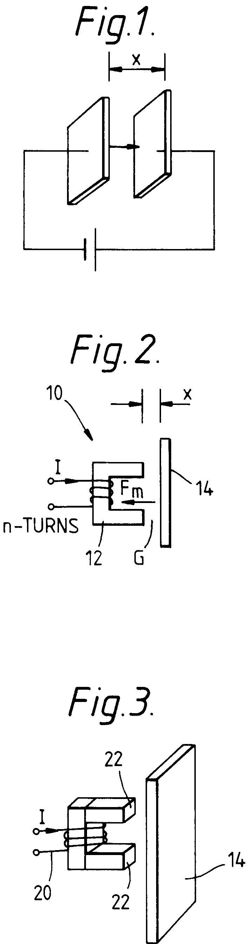

where A is the plate area, V is the voltage between the plates, x is the gap separation between the plates and $\varepsilon$ is the permittivity of the medium between the plates. Referring to Figure 1, which shows the parallel plate capacitor plate layout, in order to achieve appreciable force $F_e$, high voltages are commonly used (eg 400 volts in GB 2021266) and small gap separations of a few microns are customary. Small gaps give problems with regard to piece-part dimensional tolerances and stability as well as requiring exclusion of contamination such as dust particles which could occlude the gap and prevent free mechanical vibration of the resonator. Additionally, if a viscous medium such as air fills the small gap between the capacitor plates where one of the capacitor plates forms part of the resonator, severe damping of the resonator can occur which can reduce the basic sensitivity of the resonating vibrating Coriolis rate sensor. For this reason of viscous damping, the resonators of the vibrating rate sensors mentioned above have to be operated in a vacuum environment which adds to sensor complexity and cost and results in limited shelf life.

The present invention attempts to overcome the problems associated with the above mentioned drive arrangements by providing an electro magnetic drive rather than an electro static drive arrangement.

Accordingly the present invention a rate sensor comprising a ring or hoop resonator and a vibration means for exciting vibration in said resonator, said vibration means comprising a magnetic excitation device for generating a magnetic force and a paramagnetic region on said vibrating portion for interacting with said magnetic excitation device so as to excite said vibration.

The above arrangement has the advantage of permitting appreciable force to be achieved for gap separations of typically 0.5 mm and avoids the need to generate high voltages. Moreover, the problem of dust contamination in narrow gaps is avoided and the effects of air damping can be reduced so that adequate sensitivity can be achieved without the need to operate resonators within a vacuum enclosure.

Preferably the magnetic excitation device comprises a metal core and an electrical winding around said core for receiving an electrical current and for generating a magnetic field.

For convenience the core may comprise two or more portions, one or more of which is permanently magnetically polarised.

Preferably the rate sensor includes a current generating means for generating a.c. and/or d.c. current for supplying to said winding thereby to enable the magnetic field to be generated.

In one particular arrangement the paramagnetic region may comprise a coating of paramagnetic material on said resonator. Alternatively the paramagnetic region may comprise discrete paramagnetic members attached to the resonator. In a still further alternative arrangement, the resonator itself may comprise a paramagnetic material and may form the paramagnetic region. In a particularly convenient arrangement, the rate sensor may include a resonator support structure forming a magnetic return path for the magnetic excitation device.

In one or four alternative arrangements, the resonator is centrally mounted and the magnetic excitation device is positioned radially outward of the vibrating portion. In a second arrangement, the resonator is centrally mounted and the magnetic excitation device is positioned radially inwards of the vibrating portion. In the third arrangement, the resonator is mounted at its periphery and the magnetic excitation device is positioned radially inward of the vibrating portion. Alternatively, a fourth arrangement could be employed in which the resonator is mounted at its periphery and the magnetic excitation device is positioned radially outward of the vibrating portion.

Advantageously two or more excitation devices are included in the rate sensor.

The present invention will now be more particularly described with reference to the following drawings in which:-

Figure 1 is a diagrammatic representation of the prior art electrostatic excitation apparatus,

Figure 2 is a side elevation of an electromagnetic vibration means for incorporation into the present invention,

Figure 3 is a prospective view of a preferred embodiment of the vibration means shown in Figure 2,

Figure 4 is a plan view of a rate sensor according to the present invention having numerous vibration means provided thereon, and

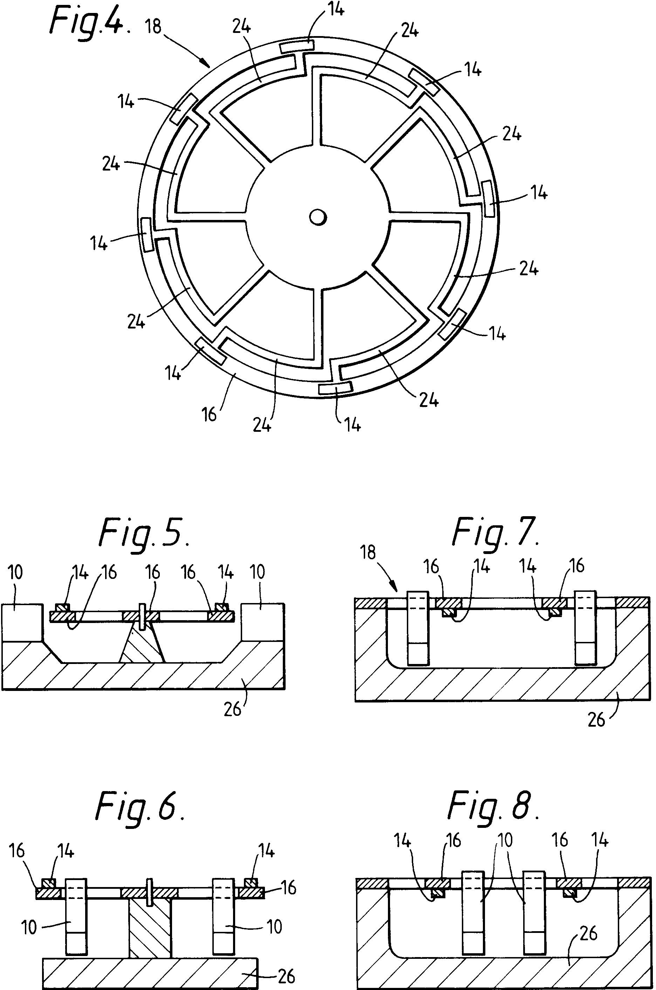

Figures 4, 5 6 and 7 illustrate various arrangements of resonator suspension positions and vibrator positioning.

Referring now to the drawings in general, but particularly to Figures 2 and 3, the vibration means shown generally at 10 comprises a magnetic excitation device 12 for generating a magnetic force and a paramagnetic region 14 provided on the vibrating portion 16 of the rate sensor shown generally at 18 and best seen in Figures 4 to 8. The magnetic excitation device 12 may comprise one core as shown in Figure 2 or may comprise one or more core parts one or more of which may be magnetically polarised, ie permanent magnets as shown in Figure 3. A current supply means (not shown) is provided for providing a d.c. component and an a.c. component for non-polarised cores, or simply an a.c. component where polarised cores are used, or simply an a.c. component for non-polarised cores where frequency doubling can be tolerated since $F_m$ is developed irrespective of the direction of I in this situation. If the reluctance of the gap width X largely defines the reluctance of the magnetic circuit, the magnetic force $F_m$ is

$$F_m = \mu (H_o + (nI/2x))^2 A \quad Eq.2$$

where $H_o$ is the magneto motive force associated with the core magnetic polarisation, n is the number of turns of wire 20 around the core 12, A is approximately the area of the core end 22 facing the paramagnetic portion 14 illustrated in Figure 3 as a plate, and $\mu$ is the permeability of the medium present in the gap region g. The advantage of this magnetic excitation method is that the force is only determined by coil current I and polarisation magneto motive force $H_o$; geometric parameters such as A and x tend to be stable, and $\mu$ is constant provided that no magnetic saturation occurs.

The above mentioned arrangement has the additional advantage of permitting appreciable force to be achieved for gap separations of typically 0.5 mm and avoids the need to generate high voltages. Moreover, the problem of dust contamination in narrow gaps is avoided and the effect of air damping can be reduced so that adequate sensitivity can be achieved without the need to operate the resonators within a vacuum enclosure.

Comparing the equations 1 and 2, it may be derived that

$$F_m / F_e = (\mu/\varepsilon\, v^2)\, (2x^2\, H_o^2 + n^2\, I^2/2 + 2\, H_o\, n\, I\, x)$$
$$Eq.3$$

It can be seen that as x is increased in equation 2, the magnetic force $F_m$ becomes more significant than the electrostatic force $F_e$; moreover, $F_\mu$ can be increased by using many turns (large n) and strongly magnetically polarised cores ( large $H_o$ ). The magnetic excitation approach also avoids the risk-of electrical discharge that exists in the case of electrostatic excitation, particularly if high voltages are employed.

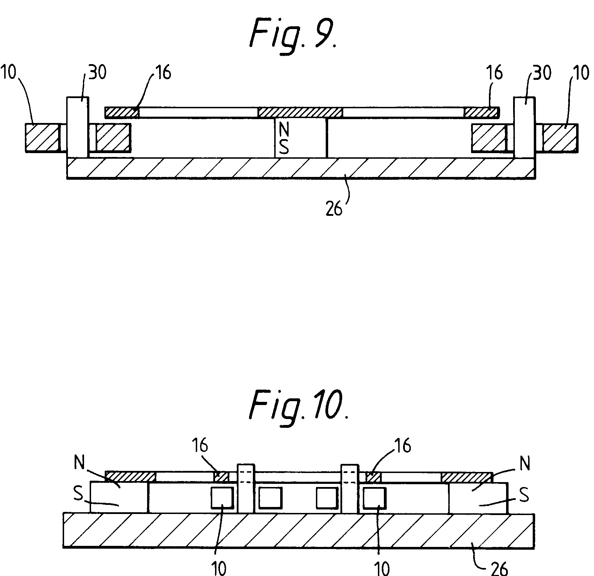

In order to magnetically excite the form of vibrating rate sensor 18 described in GB 9105060.9, it is desirable that the resonator bulk material is strongly paramagnetic or that strongly paramagnetic targets 14 of materials such as nickel, iron or rare earth elements are bonded or deposited at appropriate positions on the vibrating portion of the rate sensor as illustrated in Figures 5 to 10. Alternatively, a non-paramagnetic vibrating portion 18 could be uniformly coated or plated with a complete layer of paramagnetic material 14 such as nickel in order to make it usable for magnetic excitation. If targets of paramagnetic material 14 are used, the number will depend upon the rate sensor configuration and their location will either be on the vibrating portion 16 or on support beams 24 associated therewith. Figure 4 illustrates a centre-mounted vibrating portion 16 although edge-mounted arrangements are also feasible as illustrated in Figure 7 and 8 for example.

For a vibrating rate sensor employing magnetic excitation, the vibrating portion must be fabricated from a material with a relatively high (> 400) mechanical Q-factor such as steel, nickel, hardened beryllium copper, glass or silicon. If a metal is chosen for the vibrating portion, this may be manufactured by etching or punching from a metal sheet. Etching processes are preferred because greater tolerance control may be achieved and additional stresses are not introduced into the fabricated part. If etching is used as a method of fabrication of metal vibrating portions, it is necessary to coat the metal sheet in a photosensitive resin film into which the vibrating portions features are exposed using a suitable mask; the resist-coated sheet is then etched in a chemical bath containing acid, ferric chloride or similar to leave the formed component remaining at the completion of the etching process. The component is then rinsed and residual resist removed. An alternative method to etching the component from sheet is to employ direct laser cutting (by ablation or laser-assisted plasma machining).

It is also feasible to use silicon or glass for the vibrating portion as described above. Etching of these materials may be achieved using processes based on hydrofluoric acid or potassium hydroxide. More exotic processes such as gaseous plasma etching or laser machining may be employed to form the resonator from glass or silicon. However, these processes tend to be more expensive than simple wet chemical etching.

Four basic configurations of the rate sensor 18 are illustrated in Figures 5 to 8. In Figure 5 the mounting base 26 merely provides mechanical support for the magnetic excitation devices 10 and the vibrating portion 16 to ensure stable mechanical registration. Figure 6 Illustrates a similar arrangement where the magnetic excitation devices 12 are positioned radially inward of the vibrating portion 16. Figures 7 and 8 illustrates an arrangement where the vibrating portion 16 is mounted at its periphery to the base 26 and the excitation devices 12 are mounted externally or internally or a radially inward vibrating portion 16.

One of the advantages of the above mentioned C-shaped magnetic excitation device 12 is that the magnetic field associated with excitation is localised to the vicinity of the drive device itself. However, it has the disadvantage of a large number of individual parts being required, particularly if several excitation devices are used with each vibrating portion 16. If the bulk material of the vibrating portion 16 is highly paramagnetic (eg $u_r$ > 500) for example if steel were employed, it is possible to use the support beams 24 as part of the excitation devices magnetic circuits. Figure 9 illustrates the arrangement associated with this scheme where the excitation device is located on one or more paramagnetic pillars 30 which either locate onto the paramagnetic base 26 or are an integral part thereof. In Figure 9, the base 26 and pillars 30 can be formed from a soft annealed steel sheet where the pillars 30 are formed by bending up some radial tabs from said base. Alternatively, the base 26 and pillars 30 can be fabricated as a moulded ferrite compound. Figure 10 illustrates an alternative arrangement whereas the resonator is mounted at its periphery and the vibrating portion 16 is provided internally thereon. In this arrangement the vibration means 10 is provided adjacent the vibrating portion.

The above mentioned invention provides a compact and simple means of exciting a resonator into resonance, the resonator being suitable for forming the basis of a vibrating Coriolis rate sensor. The invention avoids the need for high voltages, small gap widths and vacuum operating environment.

**Claims**

1. A rate sensor (18) comprising a ring or hoop resonator having a vibrating portion (16) and a vibration means (10) for exciting vibration in said resonator, characterised in that said vibration means (10) comprises a magnetic excitation device (12) for generating a magnetic force and a paramagnetic region (14) on said vibrating portion (16) for interacting with said magnetic excitation device (12) so as to excite said vibration.

2. A rate sensor as claimed in claim 1 in which the magnetic excitation device (12) comprises a metallic core (12) and an electrical winding (20) around said core for receiving an electrical current and for generating a magnetic field.

3. A rate sensor as claimed in claim 2 including a permanently magnetically polarised core (12).

4. A rate sensor as claimed in claim 2 or claim 3 in which said core (12) comprises two or more portions (22), one or more of which is permanently magnetically polarised.

5. A rate sensor as claimed in any one of claims 2 to 4 including current generating means for generating a.c. and/or d.c. current for supplying to said winding (20).

6. A rate sensor as claimed in any one of claims 1 to 5 in which said paramagnetic region (14) comprises a coating of paramagnetic material on said resonator (16).

7. A rate sensor as claimed in any one of claims to 1 to 5 in which said paramagnetic region (14) comprises discrete paramagnetic members attached to said resonator (16).

8. A rate sensor as claimed in any one of claims 1 to 5 in which said resonator (16) comprises a paramagnetic material and forms said paramagnetic region.

9. A rate sensor as claimed in any one of claims 1 to 8 including a resonator support structure (26) forming a magnetic return path for said magnetic excitation device (12).

10. A rate sensor as claimed in any one of claims 1 to 9 in which said resonator (16) is centrally mounted and said magnetic excitation device (12) is positioned radially outward of said vibrating portion (16).

11. A rate sensor as claimed in any one of claims 1 to 9 in which said resonator (16) is centrally mounted and said magnetic excitation device (12) is positioned radially inward of said vibrating portion (16).

12. A rate sensor as claimed in any one of claims 1 to 9 in which said resonator (16) is mounted at its periphery and said magnetic excitation device (12) is positioned radially inward of said vibrating portion (16).

13. A rate sensor as claimed in any one of claims 1 to 9 in which said resonator (16) is mounted at its periphery and said magnetic excitation device (12) is positioned radially outward of said vibrating portion (16).

14. A rate sensor as claimed in any of of claims 1 to 13 including two more more excitation devices.

*Fig.1.*

*Fig.2.*

*Fig.3.*

Fig.4.

Fig.5.

Fig.7.

Fig.6.

Fig.8.

# Fig. 9.

# Fig. 10.

European Patent
Office

# EUROPEAN SEARCH REPORT

Application Number

EP 93 30 2331

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 793 195 (KONING)<br>* column 3, line 20 - column 5, line 13; figures 2A,5 *<br>--- | 1,2,9 | G01C19/56 |
| X | Section EI, Week 7540,<br>Derwent Publications Ltd., London, GB;<br>Class S02, Page 3, AN 75-K9162W<br>& SU-A-456 208 (ALIMISHEW) 20 February 1975<br>* abstract *<br>--- | 1 | |
| X | US-A-3 307 409 (NEWTON)<br>* column 6, line 11 - line 25; figures 9-11 *<br>--- | 1 | |
| X | US-A-3 113 463 (HOLT)<br>* column 3, paragraph 1 *<br>* column 4, paragraph 1; figures *<br>--- | 1 | |
| X | DE-A-1 798 394 (LITTON)<br>* page 5, last paragraph; claim 1; figures 1,2 *<br>--- | 1 | |
| D,A | EP-A-0 461 761 (BRITISH AEROSPACE)<br>* page 5, line 15 - line 23; figures *<br>--- | 1 | TECHNICAL FIELDS SEARCHED (Int. Cl.5)<br><br>G01C |
| D,A | FR-A-2 561 389 (CHARLES STARK DRAPER LAB.)<br>* page 2, paragraph 3 *<br>--- | 1 | |
| A | EP-A-0 411 849 (BRITISH AEROSPACE)<br>* column 7, line 12 - line 16; figures *<br><br>----- | 1 | |

The present search report has been drawn up for all claims

| Place of search | Date of completion of the search | Examiner |
|---|---|---|
| THE HAGUE | 09 JULY 1993 | PFLUGFELDER G.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)